**Europäisches Patentamt**

**European Patent Office**

**Office européen des brevets**

(19)

(11) Veröffentlichungsnummer : **0 109 092 B2**

(12) # NEUE EUROPÄISCHE PATENTSCHRIFT

(45) Veröffentlichungstag der neuen Patentschrift :
02.09.92 Patentblatt 92/36

(51) Int. Cl.$^5$ : **G11B 23/02**

(21) Anmeldenummer : **83111449.1**

(22) Anmeldetag : **15.11.83**

(54) **Aufnahmebehälter.**

(30) Priorität : **16.11.82 DE 3242296**

(43) Veröffentlichungstag der Anmeldung :
**23.05.84 Patentblatt 84/21**

(45) Bekanntmachung des Hinweises auf die
Patenterteilung :
**11.03.87 Patentblatt 87/11**

(45) Bekanntmachung des Hinweises auf die
Entscheidung über den Einspruch :
**02.09.92 Patentblatt 92/36**

(84) Benannte Vertragsstaaten :
**AT BE CH DE FR GB IT LI NL SE**

(56) Entgegenhaltungen :
**EP-A- 0 001 353**
**AU-B- 519 383**
**DE-A- 3 027 024**
**DE-U- 8 208 141**

(56) Entgegenhaltungen :
**FR-A- 2 221 784**
**FR-A- 2 503 667**
**FR-A- 2 518 297**
**GB-A- 2 091 692**
**GB-A- 2 094 761**
**GB-A- 2 101 970**
**US-A- 2 643 899**
**US-A- 3 195 924**
**US-A- 3 743 081**
**US-A- 4 289 235**

(73) Patentinhaber : **Burgschweiger, Otto**
**Steinbecker Strasse 109c**
**W-2110 Buchholz (DE)**

(72) Erfinder : **Burgschweiger, Otto**
**Steinbecker Strasse 109c**
**W-2110 Buchholz (DE)**

(74) Vertreter : **Glawe, Delfs, Moll & Partner**
**Patentanwälte**
**Liebherrstrasse 20**
**W-8000 München 26 (DE)**

EP 0 109 092 B2

**Beschreibung**

Die Erfindung betrifft einen buchförmigen Aufnahmebehälter gemäß des Oberbegriffs des Anspruchs 1 bzw. Anspruchs 4.

Ein solcher Aufnahmebehälter ist durch die DE-U-82 08 141 bekannt. Dieser Aufnahmebehälter hat jedoch den Nachteil, daß einen flächigen Zuschnitt aufweisende Aufzeichnungsträger für akustische und/oder optische Informationen nur umständlich aus dem jeweiligen Aufnahmeteil entnommen werden können. Um eine Beschädigung des bekannten Aufnahmebehälters zu vermeiden, kann dieser daher nur für die Einlagerung von solchen Aufzeichnungsträgern verwendet werden, die aufgrund ihrer Gestaltung leicht untergreifbar sind. Ein weiterer Aufnahmebehälter ist durch die GB-A 2 094 761 bekannt geworden. Dieser ist aus einer Kunststoffolie wie z.B. aus PVC ausgebildet, wobei der Deckel und das Bodenteil jeweils ein Aufnahmeteil aufweisen. Die seitlichen Kanten des Rückenteils zum Deckel und zum Bodenteil reißen leicht ein, da das Rückenteil nur über eine geringe Eigensteifigkeit verfügt. Hierdurch geht die Eigenstabilität des Aufnahmebehälters verloren mit der Folge, daß dieser sich bei mehrfachem Öffnen und Schließen so verformt, daß er unbrauchbar wird. Bei einer Verformung der Aufnahmeteile des Aufnahmebehälters verformen sich ebenfalls die Profilierungsabschnitte der miteinander in Eingriff zu bringenden umlaufenden Randstege, so daß ein Staubdichter Verschluß nicht gewährleistet ist. Selbst bei noch unverformtem Aufnahmebehälter besteht der Nachteil, daß eine sichere Aufbewahrung des eingelagerten band- oder scheibenförmigen Aufzeichnungsträgers nicht möglich ist, da sich ungeschickter Handhabung der Deckel ohne weiteres von selbst öffnen kann. Ein weiterer Nachteil besteht darin, daß sich die in einem Aufnahmeteil eingelagerten Aufzeichnungsträger ohne Ankippen des Aufnahmebehälters nur umständlich aus dem Aufnahmeteil eintnehmen Lassen, da die hierzu an den Randstegen vorgesehenen Ausnehmungen eine zu geringe Tiefe aufweisen. Ein durch die GB-A 2 091 692 bekannt gewordener Aufnahmebehälter besteht außenseitig aus einem Karton oder dergleichen, auf dem innenseitig die Aufnahmeteile aus profilierter Kunstfolie aufgeklebt sind. Bei Bei diesem Aufnahmebehälter besteht ebenfalls die Gefahr des Einreißens der seitlichen Kanten des Rückenteils zum Deckel und Bodenteil. Die Aufnahmeteile besitzen beim Aufeinanderliegen auch keinen Klemmverschluß, so daß im Ergebnis dieser Aufnahmebehälter die gleichen Nächteile aufweist wie der in der GB-A 2 094 761 beschriebene.

Die Aufgabe der Erfindung besteht darin, einen Aufnahmebehälter der eingangs genannten Art für band- oder scheibenförmige Aufzeichnungsträger so auszubilden, daß die Nachteile des bekannten Aufnahmebehälters vermieden werden und die Aufzeichnungsträger bei Aufrechterhaltung eines formbeständigen Buchcharakters des Aufnahmebehälters lagesicher und staubdicht angeordnet werden können.

Erfindungsgemäß erfolgt die Lösung der Aufgabe durch die kennzeichnenden Merkmale der Ansprüche 1 und 4. Ausgestaltungen der Erfindung werden in den abhängigen Ansprüchen beschrieben.

In den Zeichnungen sind Ausführungsbeispiele von Aufnahmebehältern für die Erfindung dargestellt. Es zeigt:

Fig. 1 einen Aufnahmebehälter in einer schaubildlichen Ansicht,

Fig. 2 und 3 den Aufnahmebehälter nach Fig. 1 in einer Seiten- ansicht in aufgeklappter und geschlossener Stellung,

Fig. 4 den Aufnahmebehälter in aufgeklappter Stellung in einer schaubildlichen Ansicht von vorn,

Fig. 5 den Aufnahmebehälter in einer geöffneten Stellung in einer Seitenansicht im Schnitt,

Fig. 6 den Aufnahmebehälter in aufgeklappter Stellung 35 in einer Ansicht von vorn,

Fig. 7 einen Eckabschnitt des Bodenteils mit Klemmglied in einer vergrößerten Detailansicht im Schnitt,

Fig. 8 eine weitere Ausbildung eines Aufnahmebehälters in aufgeklappter Stellung in einer Ansicht von vorn,

Fig. 9a den Aufnahmebehälter nach Fig. 8 in einer Seitenansicht im Schnitt A-A,

Fig. 9b eine Detailansicht im Schnitt B-B.

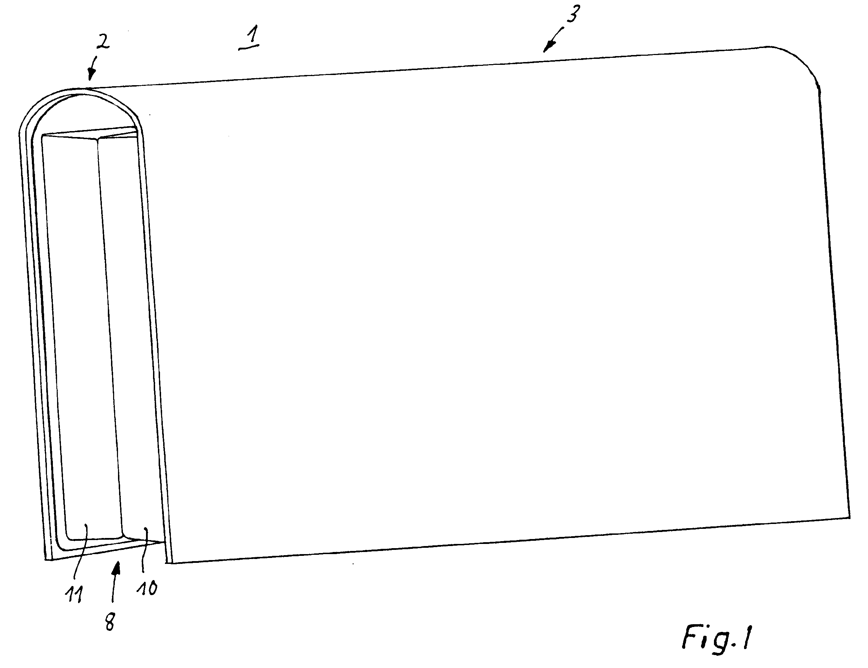

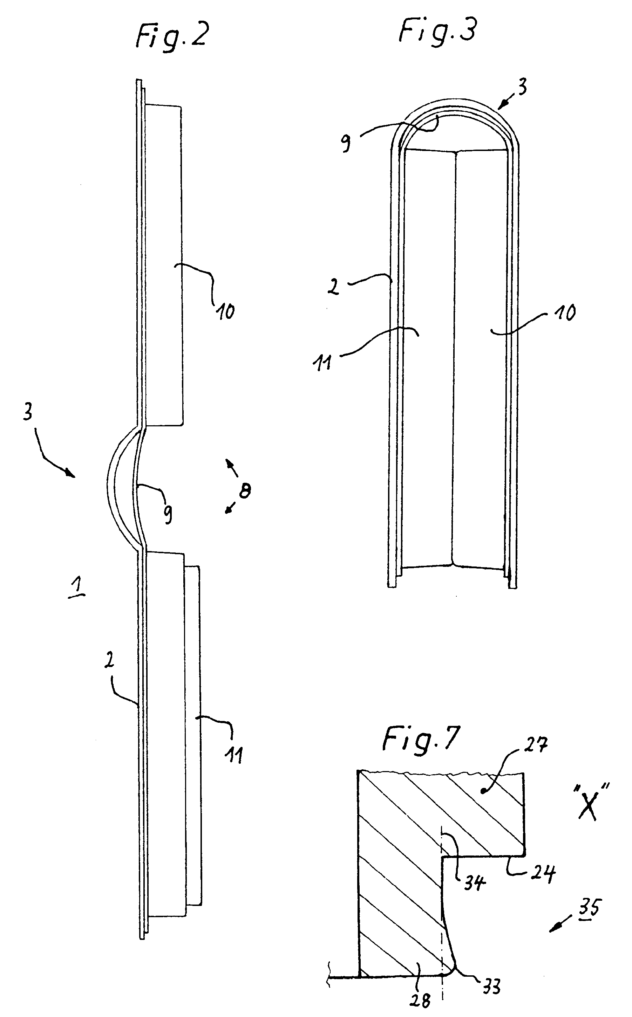

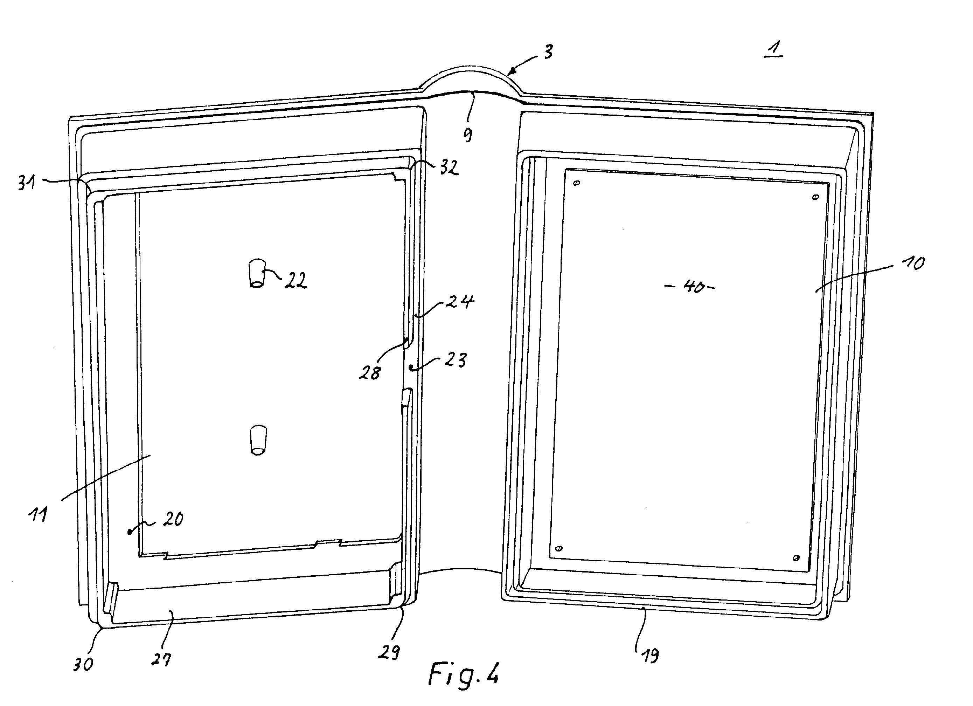

Der Aufnahmebehälter 1 besteht aus einer Buchdecke 2 aus Karton od. dgl., die im Rückenabschnitt 3 gerundet ausgebildet ist. Auf der Innenseite 6 der Buchdecke 2 ist ein Aufnahmeteil 8 angeordnet, das in an sich bekannter Weise aus einem einstückigen Zuschnitt 7 aus Polystyrol od. dgl. besteht (Fig. 1 bis 4, 8, 9a).

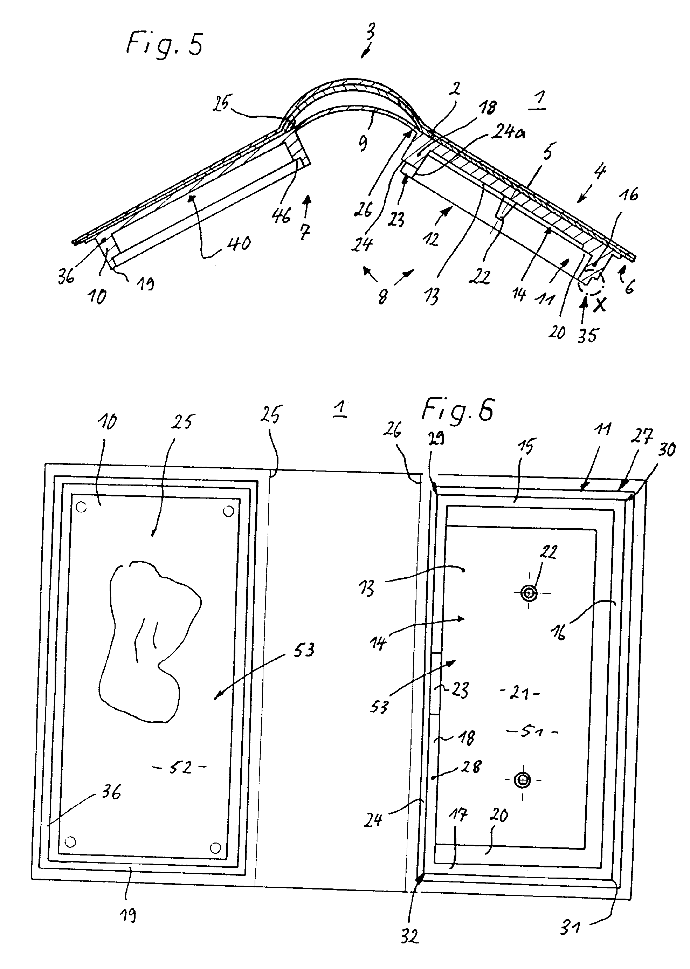

Auf der Aussenseite 4 der Buchdecke 2 ist ein folienkaschierter Druckbezug 5 fest mit der Buchdecke 2 verbunden. Der Druckbezug 5 ist vorzugsweise aus einer reissfesten Polypropylenfolie gebildet, die direkt kaschierte Farbdrucke aufweist. Unterschiedliche Video-Systeme z.B. können z.B. durch Metallheissfolienprägungen unlösbar kenntlich gemacht werden (Fig. 5 und 6).

Das Aufnahmeteil 8 ist mittels Klebung mit der Buchdecke 2 verbunden. Im Bereich des Rückenabschnitts 3 ist an dem Aufnahmeteil 8 ein konkav gerundeter Verbindungsabschnitt 9 ausgebildet, der nicht mit dem Rückenabschnitt 3 verbunden ist. Der Verbindungsabschnitt 9 ist so ausgebildet, dass er federnd elastische Eigenschaften hat und das Schliessen des Aufnahmebehälters 1 unterstützt.

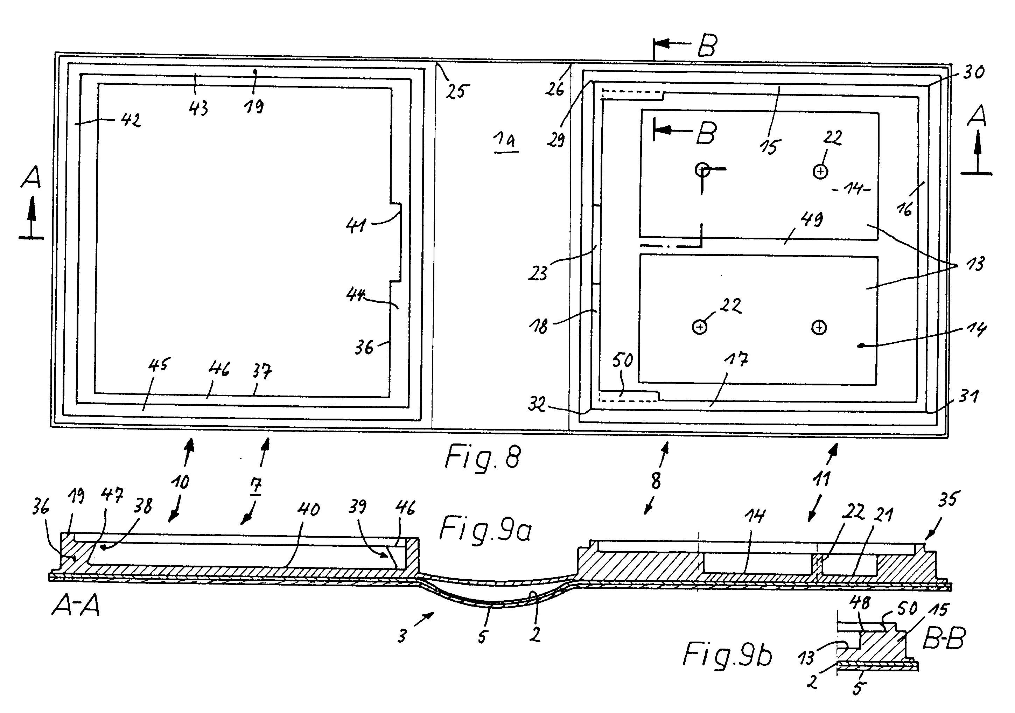

Hierzu sind ergänzend die Eckabschnitte 29, 30, 31, 32 des durch die Randstege 15, 16, 17, 18 gebildeten umlaufenden Rührungsstegs 28 der Wandung 27 ballig zum äusseren Rand der Wandung 27 durch Materialverdickungen 33 vorgewölbt (Fig. 7). Diese Materialverdickungen 33 dienen als Klemmglieder 35, die einen lösbaren Klemmverschluss des Bodenteils 11 mit dem Deckel 10 ermöglichen.

Das Aufnahmeteil 8 besteht aus einem Deckel 10 und einem Bodenteil 11, zwischen denen der Verbindungsabschnitt 9 angeordnet ist. In dem Bodenteil 11 ist eine gegenüber dem Öffnungsquerschnitt 12 eine verringerte Auflagerfläche 13 aufweisende Vertiefung 14 ausgebildet. Die Vertiefung 14 liegt an den drei äusseren Randstegen 15, 16, 17 des Bodenteils unter Ausbildung eines Absatzes 20 an. In der Vertiefung 14 sind zwei an sich bekannte von der Bodenfläche 21 vorragende Zapfen 22 als Kassettenhalter ausgebildet. Durch die beiden Zapfen 22 und die Vertiefung 14 ist es möglich, in dem Bodenteil 11 sowohl Standardkassetten wie auch die formatlich kleineren Betamax-Kassetten sicher unterzubringen.

In dem dem Rückenabschnitt 3 zugewandten Randsteg 18 des Bodenteils 11 ist eine Ausnehmung 23 ausgebildet. Diese Ausnehmung 23 erstreckt sich bis zur Anschlagfläche 24 des dem Randsteg 18 zugeordneten Wandabschnitts der Wandung 27 des Bodenteils 11 und dient als Ausnahmehilfe für die in dem Bodenteil 11 befindliche Kassette. Bei geschlossenem Aufnahmebehälter wird die Ausnehmung 23 durch den umlaufenden Randsteg 19 des Deckels 10 abgedeckt, so dass die in dem Bodenteil 11 befindliche Kassette staubdicht gelagert ist.

Die Bodenfläche 40 des Deckels 10 ist als Symbolträgerfläche ausgebildet. Hierzu kann in der Form des Fertigungswerkzeugs eine der Bodenfläche 25 entsprechende Platte mit erhabenen Symbolen wahlweise eingesetzt werden, um auf der Bodenfläche 25 unterschiedliche Informationen wiedergeben zu können.

Der Aufnahmebehälter 1 weist äusserlich den formgetreuen Charakter eines Buches auf, was insbesondere dann erzielt wird, wenn die Buchdecke 2 eine Originalbuchdecke ist. Durch den Überzug der Buchdecke 2 mit einem direkt glanzfolienkaschierten Druckbezug 5 oder einem vergleichbaren Werkstoff ist es möglich, die werbliche Brillanz von verwendeten Mehrfarbdrucken auf Dauer zu halten. Die besondere Form der Ausnehmung 23 im hochstehenden Führungssteg 24 des Randstegs 18 sowie die als Schnappverschluss ausgebildeten ineinandergreifenden umlaufenden Kanten des umlaufenden Randstegs 19 des Deckels 10 und der Randstege 15, 16, 17, 18 des Bodenteils 11 ermöglichen eine optimale Staubsicherheit und schützen die in dem Bodenteil 11 liegende Kassette gleichzeitig vor dem Herausfallen beim Öffnen. Die mechanisch besonders belasteten Bereiche an den Innengelenken 25, 26 sind durch den gerundeten Verbindungsabschnitt 9 weitgehend vor Zerstörung geschützt. Ein besonderer Vorteil des Aufnahmebehälters 1 besteht darin, dass der Druckbezug 5 fest mit der Buchdecke 2 verbunden ist und nur schwierig zu Reproduktionszwecken verwendet werden kann. Diese Fälschungssicherheit des Aufnahmebehälters 1 wird noch dadurch erhöht, wenn der folienkaschierte Druckbezug 5 durch eine Metallheissfolienprägung gekennzeichnet wird.

In den Fig. 8-9b ist ein weiterer Aufnahmebehälter 1a dargestellt, der zur kombinierten Aufnahme von magazinartigen Informationsträgern, Kassetten sowie als Diskette ausgebildeten scheibenförmigen Aufzeichnungsträgern dient. Der magazinartige Informationsträger kann auf der Bodenfläche 40 des Deckels 10 gelagert werden. Zur Halterung sind an den Randstegabschnitten 42, 44 in der Ebene der Auflagefläche 46 Verdickungen 47 ausgebildet, die ein Herausfallen des magazinartigen Informationsträgers aus dem Deckel 10 verhindern. Um den Informationsträger aus dem Deckel 10 entnehmen zu können, ist in dem Randstegabschnitt 44 eine Ausnehmung 41 ausgebildet, die sich über die Höhe des umlaufenden Randstegs 19 bis zur Bodenfläche 40 erstreckt. Im Bereich dieser Ausnehmung 41 ist es möglich, den magazinartigen Informationsträger zu untergreifen und seitlich zu verschieben, bis er an der Verdickung 47 des Randstegabschnitts 44 vorbei nach oben entnommen werden kann.

In dem Bodenteil 11 sind zwei Vertiefungen 14 ausgebildet, auf deren Auflageflächen 13 jeweils zwei Zapfen 22 angeordnet sind. Diese Zapfen 22 dienen zur Halterung von Kassetten, die jeweils in eine der Ausnehmungen 14 eingelegt werden können. Zwischen den Vertiefungen 14 und den Randstegen 15, 16, 17, 18 ist eine umlaufende Absatzfläche 48 ausgebildet, auf die z.B. eine Diskette gelegt werden kann. Mittig wird die Diskette durch einen Mittelsteg 49 zwischen den Vertiefungen 14 unterstützt. Zur Halterung der Diskette auf der umlaufenden Absatzfläche 48 ist an den Randabschnitten der Randstege 15, 17 jeweils ein Halteglied 50 angeordnet. Dieses ist als die Absatzfläche 48 überragende Materialverdickung ausgebildet. Zur Halterung der Diskette auf der Absatzfläche 48 ist es lediglich erforderlich, die Diskette unter die Halteglieder 50 zu schieben. Die Entnahme der Diskette aus dem Bodenteil 11 kann durch seitliches Untergreifen erfolgen.

Wie in Fig. 6 angedeutet ist es auch möglich, in den durch die Randstege 15, 16, 17, 18 des Bodenteils 11 und/oder des umlaufenden Stegs 36 des Deckels 10 gebildeten Hohlräumen 51, 52 Profilkörper 53 einzusetzen, die zur Halterung von Aufzeichnungsträgern dienen. Diese Profilkörper 53 können in den jeweiligen Hohlräumen 51, 52 mittels geeigneter Klemmglieder lösbar befestigt werden. Durch diese Profilkörper 53 ist es möglich, einen vorgegebenen Aufnahmebehälter zur Lagerung von Aufzeichnungsträgern unterschiedlicher Abmessungen zu verwenden.

## Patentansprüche

1. Buchförmiger Aufnahmebehälter (1, 1a) für band- oder scheibenförmige Aufzeichnungsträger für akustische und/oder optische Informationen sowie Datenverarbeitungsprogramme, mit einem durch einen konkav gerundeten Rückenabschnitt (3) aus Karton miteinander verbundenen Deckel (10) und Bodenteil (11) aus Karton, auf deren Innenseiten (6) jeweils ein aus Kunststoff bestehendes Aufnahmeteil (8) mit einem durch umlaufende Randstege (15, 16, 17, 18) mit einer Ausnehmung (23) in dem Randsteg (18) bzw. einem umlaufenden Steg (36) gebildeten Hohlraum (51, 52) derart ausgebildet ist, daß bei aufeinanderliegendem Deckel (10) und Bodenteil (11) stirnseitige Profilierungsabschnitte des umlaufenden Stegs (36) und der Randstege (15, 16, 17, 18) ineinandergreifen,wobei die Eckabschnitte (29, 30, 31, 32) des an den Randstegen (15, 16, 17, 18) des Bodenteils (11) ausgebildeten umlaufenden Führungsstegs (28) ballig zum äußeren Rand der Wandung (27) der Randstege (15, 16, 17, 18) zur Ausbildung eines lösbaren Klemmverschlusses für den auf das Bodenteil (11) klappbaren Deckel (10) durch elastische Anlage an dem an dem umlaufenden Steg (36) ausgebildeten umlaufenden Randsteg (19) des Deckels (10) vorgewölbt sind und wobei in dem Bodenteil (11) mindestens eine gegenüber dessen Öffnungsquerschnitt eine verringerte Auflagefläche (13) aufweisende Vertiefung (14) mit einem an mindestens drei Randstegen anliegenden Absatz (20) ausgebildet ist, die Aufnahmeteile (8) des Deckels (10) und Bodenteils (11) als Tiefziehteil aus Polystyrol oder dergleichen gebildet und mit einem mit dem Rückenabschnitt (3) der Buchdecke (2) nicht verbundenen konkav gerundet ausgebildeten Verbindungsabschnitt (9) verbunden sind, wobei durch federelastische Ausbildung des Verbindungsabschnitts (9) bei geöffneten Aufnahmeteilen (8) durch den Verbindungsabschnitt (9) eine den Deckel (10) und das Bodenteil (11) zueinander bewegende Kraft ausgeübt wird und sich bei aufeinanderliegendem Deckel (10) und Bodenteil (11) der Verbindungsabschnitt (9) rund und formstabilisiert ausbildet und sich die an dem dem Rückenabschnitt (3) zugewandten Randsteg (18) des Bodenteils (11) befindliche Ausnehmung (23) bis zur Anschlagfläche (24) des dem Randsteg (18) zugeordneten Wandabschnitts der Wandung (27) erstreckt, dadurch gekennzeichnet, daß in einem der Aufnahmeteile (8) von der Bodenfläche (21) vorragende Noppen oder Zapfen (22) zur Kassettenhalterung und an der Innenwand (37) des umlaufenden Randstegs (19) als elastische Klemmglieder ausgebildete Haltemittel (38) als Auflagerfläche für einen flächigen Zuschnitt aufweisende Informationsträger ausgebildet sind.

2. Aufnahmebehälter nach Anspruch 1, dadurch gekennzeichnet, daß die Haltemittel als an mindestens einem Randstegabschnitt (42, 43, 44, 45) an der durch den umlaufenden Randsteg (19) an dem umlaufenden Steg (36) angeordneten Anschlagfläche (46) sich über mindestens einen Teilabschnitt des Randstegabschnitts (42, 43, 44, 45) erstreckende und über die Bodenfläche (40) vorragende Verdickung (47) ausgebildet sind.

3. Aufnahmebehälter nach Anspruch 2, dadurch gekennzeichnet, daß in mindestens einem Randstegabschnitt (42, 43, 44, 45) innenwandseitig eine sich über die Höhe des umlaufenden Stegs (36) bis zur Bodenfläche (4) erstreckende nutartige Ausnehmung (41) ausgebildet ist.

4. Buchförmiger Aufnahmebehälter (1, 1a) für band- oder scheibenförmige Aufzeichnungsträger für akustische und/oder optische Informationen sowie Datenverarbeitungsprogramme, mit einem durch einen konkav gerundeten Rückenabschnitt (3) aus Karton miteinander verbundenen Deckel (10) und Bodenteil (11) aus Karton, auf deren Innenseiten (6) jeweils ein aus Kunststoff bestehendes Aufnahmeteil (8) mit einem durch umlaufende Randstege (15, 16, 17, 18) mit einer Ausnehmung (23) in dem Randsteg (18) bzw. einem umlaufenden Steg (36) gebildeten Hohlraum (51, 52) derart ausgebildet ist, daß bei aufeinanderliegendem Deckel (10) und Bodenteil (11) stirnseitige Profilierungsabschnitte des umlaufenden Stegs (36) und der Randstege (15, 16, 17, 18) ineinandergreifen wobei die Eckabschnitte (29, 30, 31, 32) des an den Randstegen (15, 16, 17, 18) des Bodenteils (11) ausgebildeten umlaufenden Führungsstegs (28) durch Materialverdickungen aus Polystyrol oder dergleichen ballig zum äußeren Rand der Wandung (27) der Randstege (15, 16, 17, 18) zur Ausbildung eines lösbaren Klemmverschlusses für den auf das Bodenteil (11) klappbaren Deckel (10) durch elastische Anlage an dem an dem umlaufenden Steg (36) ausgebildeten umlaufenden Randsteg (19) des Deckels (10) vorgewölbt sind und wobei in dem Bodenteil (11) mindestens eine gegenüber dessen Öffnungsquerschnitt eine verringerte Auflagefläche (13) aufweisende Vertiefung (14) mit einem an mindestens drei Randstegen anliegenden Absatz (20) ausgebildet ist, die Aufnahmeteile (8) des Deckels (10) und Bodenteils (11) als Tiefziehteil aus Polystyrol oder dergleichen gebildet und mit einem mit dem Rückenabschnitt (3) der Buchdecke (2) nicht verbundenen konkav gerundet ausgebildeten Verbindungsabschnitt (9) verbunden sind, wobei durch federelastische Ausbildung des Verbindungsabschnitts (9) bei geöffneten Aufnahmeteilen (8) durch den Verbindungsabschnitt (9) eine den Deckel (10) und das Bodenteil (11) zueinander bewegende Kraft ausgeübt wird und sich bei aufeinanderliegendem Deckel (10) und Bodenteil (11) der Verbindungsabschnitt (9) rund und formstabilisiert ausbildet und sich die an dem dem Rückenabschnitt (3) zugewandten Randsteg (18) des Bodenteils (11) befindliche Ausnehmung (23) bis zur Anschlagfläche (24) des dem Randsteg (18) zugeordneten Wandabschnitts der Wandung (27) erstreckt, dadurch gekennzeichnet, daß in einem der Aufnahmeteile (8) von der Bodenfläche (21) vorragende Noppen oder Zapfen (22) zur Kassettenhalterung und daß an mindestens einem Randsteg (15, 16, 17, 18) ein die Absatzfläche (48) überragendes Halteglied (50) zur lösbaren Halterung von plattenförmigen Aufzeichnungsträgern auf der Absatzfläche (48) ausgebildet ist.

5. Aufnahmebehälter nach Anspruch 1 bis 4, dadurch gekennzeichnet, daß in dem durch die Randstege (15, 16, 17, 18) des Bodenteils (11) und/oder des umlaufenden Stegs (36) des Deckels (10) gebildeten Hohlraum (51, 52) ein Profilkörper (53) aus Polystyrol oder dergleichen zur Halterung von Aufzeichnungsträgern lösbar einsetzbar ist.

## Claims

1. Book-like container (1, 1a) for tape-like or disk-like record supports for acoustic and/or optical information, as well as data processing programmes, with a cover member (10) and a base member (11) of cardboard being connected by a concave back section (3) of cardboard, with a reception part (8) being of plastic on the insides (6) with a cavity (51, 52) being formed by all-round marginal webs (15, 16, 17, 18), the all round marginal webs (18) respectively the all-round marginal web (36) having a clearance (23), the frontal profile sections of the all-round marginal web (36) and the all-round marginal webs (15, 16, 17, 18) interlocks in the case the cover member (10) and the base member (11) are superposed, at wich the marginal webs (15, 16, 17, 18) of base member (11) are constructed as a detachable clamp closure for the cover member (10) hinged to the base member (11) by sitting elastically close on the all-round web (19) of the all-round marginal web (36) in that way that the corner sections (29, 30, 31, 32) of the all-round guidance web (28) being formed at the base member (11) are convexly protuded towards the outer edge of wall (27) of the marginal webs (15, 16, 17, 18), the corner sections (29, 30, 31, 32) of the all-round guidance web (28) of wall formed by marginal webs convexly protruded towards the outer edge of wall, and at which in the base member (11) is formed at least one recess (14) having a reduced bearing surface (13) compared with the opening cross-section, the recess (14) forms a shoulder (20) engaging on three marginal webs of base member (11), the reception parts (8) of cover member (10) and base member (11) are being modelled as swaged parts of polystyrene or the like connected with a concave connecting section (9), which is not connected to the back section (3) of the book cover (2) at which when the reception parts (8) are open, the connecting section (9) being resiliently elastically exerts a force moving the cover member (10) and base member (11) towards one another whereby the base member (11) and cover member (10) rest upon one another the back section (3) is round and dimensionally stable, the clearance (23) being provided in the marginal web (18) of base member (11) facing back section (3) extends up to the bearing face (24) of the wall section of wall (27) associated with the marginal web (18), characterized in that, one of the reception parts (8) is provided with lugs or pins (22) projecting from the bottom surface (21) for maintaining the cassette in place, and on the all-round marginal web (19) retaining means (38) being constructed as elastic clamping members arranged on the inner wall (37) as a bearing surface for an information carrier having a flat blank.

2. Container according to claim 1, characterized in that the retaining means (38) has at least one marginal web portion (42, 43, 44, 45) on the bearing surface (46) arranged on the all-round web (19) on the all-round marginal web (36) is constructed as a thickened portion (47) extending over at least part of the marginal web portions (42, 43, 44, 45) and which projects over the bottom surface (40).

3. Container according to claim 2, characterized in that on the inner wall side of at least one marginal web portion (42, 43, 44, 45) a clearance (41) is formed extending over the height of the all-round marginal web (36) and extending to the bottom curface (40).

4. Book-like container (1, 1a) for tape-like or disk-like record supports for acoustic and/or optical information, as well as data processing programmes, with a cover member (10) and a base member (11) of cardboard being connected by a concave back section (3) of cardboard, with a reception part (8) being of plastic on the insides (6) with a cavity (51, 52) being formed by all-round marginal webs (15, 16, 17, 18), the all round marginal webs (18) respectively the all-round marginal web (36) having a clearance (23), the frontal profile sections of the all-round marginal web (36) and the all-round marginal webs (15, 16, 17, 18) interlocks in the case the cover member (10) and the base member (11) are superposed, at which the marginal webs (15, 16, 17, 18) of base member (11) are constructed as a detachable clamp closure for the cover member (10) hinged to the base member (11) by sitting elastically close on the all-round web (19) of the all-round marginal web (36) in that way that the corner sections (29, 30, 31, 32) of the all-round guidance web (28) being formed at the base member (11) are convexly protuded towards the outer edge of wall (27) of the marginal webs (15, 16, 17, 18), the corner sections (29, 30, 31, 32) of the all-round guidance web (28) of wall formed by marginal webs convexly protruded towards the outer edge of wall, and at which in the base member (11) is formed at least one recess (14) having a reduced bearing surface (13) compared with the opening cross-section, the recess (14) forms a shoulder (20) engaging on three marginal webs of base member (11), the reception parts (8) of cover member (10) and base member (11) are being modelled as swaged parts of polystyrene or the like connected with a concave connecting section (9), which is not connected to the back section (3) of the book cover (2) at which when the reception parts (8) are open, the connecting section (9) being resiliently elastically exerts a force moving the cover member (10) and base member (11) towards one another whereby the base member (11) and cover member (10) rest upon one another the back section (3) is round and dimensionally stable, the clearance (23) being provided in the marginal web (18) of base member (11) facing back section (3) extends up to the bearing face (24) of the wall section of wall (27) associated with the marginal web (18), characterized in that, one of the reception parts (8) is provided with lugs or pins (22) projecting from the bottom surface (21) for maintaining the cassette in place and on at least one marginal web (15, 16, 17, 18) is formed a retaining member (50) projecting over the mounting surface (48) for the detachable retention of the disk-like record supports on mounting surface (48).

5. Container according to claim 1 to 4, characterized in that in the cavity (51, 52) formed by the marginal webs (15, 16, 17, 18) of base member (11) and/or the all-round marginal web (36) of cover member (10) can be detachably inserted a profile member (53) made from polystyrene or the like for securing the record supports.

## Revendications

1. Récipient (1,1a) en forme d'un livre pour des supports de diagrammes en forme de bandes ou de disques, établis pour des informations acoustiques et/ou optiques tel que des programmes de traitement de l'information, avec une couverture (10) et un élément de fond (11) composés de carton reliés par un segment de dos (3) composé de carton en forme de cuvette dont sur les côtés intérieurs (6) étant constitué chaque fois un élément de réception (8) d'une matière artificielle avec un espace vide (51, 52) formé par des plans fixes au bord (15, 16, 17, 18) circulants avec un creux (23) au plan fixe (18) resp. au plan fixe circulant (36) réalisé en ce que la couverture (10) et l'élément de fond (11) étant placés l'un sur l'autre les segments de profil sur la face du plan fixe circulant (36) et des plans fixes au bord (15, 16, 17, 18) s'enchaînent, où les coins coupés (29, 30, 31, 32) du plan fixe de guidage (28) circulant placé aux plans fixes au bord ( 15, 16, 17, 18) de l'élément de fond (11), sont voûtés en forme convexe au bord extérieur de la paroi (27) des plans fixes (15, 16, 17, 18) pour la configuration d'un serrage détachable pour la couverture (10) rabattable à l'élément de fond (11) par adaption élastique au plan fixe au bord circulant (19) constitué au plan fixe circulant (36) de la couverture (10),et où un creux (14) présenté a l'élément de fond (11) dont au moins un est formé d'une surface d'appui réduite (13) opposé de la section transversale d'ouverture de celui-ci, avec un gradin (20) adhéré à au moins de trois plans fixes au bord, les éléments de réception (8) de la couverture (10) et de l'élément de fond (11) sont reliés à un raccord (9) en cuvette, non relié au segment de dos (3) de la couverture du livre (2), en forme d'un élément d'emboutissage profond consistant en polystyrol etc. où par le raccord (9) élastique qu'il y a une transmission de force de la couverture et l'élément de fond (11) l'un sur l'autre au moyen du raccord (9) les éléments de reception (8) étant ouverts, et que le raccord (9) se présente en forme ronde et indéformable la couverture (10) et l'élément de fond (11) étant l'un sur l'autre, que le creux (23) constitué au segment de dos (3) tourné vers le plan fixe (18) de l'élément de fond (11) s'étend jusqu'à la surface d'arrêt (24) du segment de mur de la paroi (27) adjoint au plan fixe (18) caractérisé en ce qu'un bouton ou un tenon (22) ressautant de la surface (21) réalisé dans un des éléments de réception (8) pour la fixation de la cassette et que des fixations (38) disposées au mur intérieur (37) du plan fixe (19) circulant formées d'éléments de serrage élastiques sont disposées comme surfaces d'appui pour des véhicules d'information en coupe plane.

2. Récipient selon revendication 1, caractérisé en ce que les fixations se forment comme un épaissement (47) s'étendant sur au moins un segment du plan fixe au bord (42, 43, 44, 45) et ressautant par-dessus la surface (40) à au moins une part du segment du plan fixe au bord (42, 43, 44, 45) à la surface d'arrêt (46) disposée au plan fixe (36) par plan fixe circulant (19).

3. Récipient selon revendication ,2 caractérisé en ce que un creux (41) s'étendant sur l'épaisseur du plan fixe circulant (36) jusqu'à la surface (40) est disposé à au moins un segment du plan fixe (42, 43, 44, 45) situé au mur intérieur.

4. Récipient (1, 1a) en forme d'un livre pour des supports de diagrammes en forme de bandes ou de disques, établis pour des informations acoustiques et/ou optiques tel que des programmes de traitement de l'information, avec une couverture (10) et un élément de fond (11) composés de carton reliés par un segment de dos (3) composé de carton en forme de cuvette, dont sur les côtés intérieurs (6) étant constitué chaque fois un élément de réception (8) d'une matière artificielle avec un espace vide (51, 52) formé par des plans fixes au bord (15, 16, 17, 18) circulants avec un creux (23) au plan fixe (18) resp. au plan fixe circulant (36) réalisé en ce que la couverture (10) et l'élément de fond (11) étant placés l'un sur l'autre les segments de profil sur la face du plan fixe circulant (36) et des plans fixes au bord (15, 16, 17, 18) s'enchaînent, où les coins coupés (29, 30, 31, 32) du plan fixe de guidage (28) circulant placé aux plans fixes au bord ( 15, 16, 17, 18) de l'élément de fond (11), sont voûtés en forme convexe au bord extérieur de la paroi (27) des plans fixes (15, 16, 17, 18) pour la configuration d'un serrage détachable pour la couverture (10) rabattable à l'élément de fond (11) par adaption élastique au plan fixe au bord circulant (19) constitué au plan fixe circulant (36) de la couverture (10),et où un creux (14) présenté a l'élément de fond (11) dont au moins un est formé d'une surface d'appui réduite (13) opposé de la section transversale d'ouverture de celui-ci, avec un gradin (20) adhère à au moins de trois plans fixes au bord, les éléments de réception (8) de la couverture (10) et de l'élément de fond (11) sont reliés à un raccord (9) en cuvette, non relié au segment de dos (3) de la couverture du livre (2), en forme d'un élément d'emboutissage profond consistant en polystyrol etc. où par le raccord (9) élastique qu'il y a une transmission de force de la couverture et l'élément de fond (11) l'un sur l'autre au moyen du raccord (9) les éléments de réception (8) étant ouverts, et que le raccord (9) se présente en forme ronde et indéformable la couverture (10) et l'élément de fond (11) étant l'un sur l'autre, que le creux (23) constitué au segment de dos (3) tourné vers le plan fixe (18) de l'élément de fond (11) s'étend jusqu'à la surface d'arrêt (24) du segment de mur de la paroi (27) adjoint au plan fixe (18) caractérisé en ce qu'un bouton ou un tenon (22) ressautant de la surface (21) réalisé dans un des éléments de réception (8) pour la fixation de la cassette et qu'un élément de support (50) s'élevant plus haut que la réduction (48) est disposé à au moins un plan fixe au bord (15, 16, 17, 18) pour la fixation détachable de supports de diagramme en forme de disques sur la réduction (48).

5. Récipient selon revendication 1 ou 4, caractérisé en ce qu'un corps profilé (53) consistant en polystyrol etc. pour la fixation de supports de diagramme est placé détachablement dans l'espace vide (51, 52) formé par les plans fixes au bord (15, 16, 17, 18) d'élément de fond (11) et/ou le plan fixe circulant (36) de la couverture (10).

Fig.1

*Fig.2*

*Fig.3*

10

3

8

9

1

2

11

2

9

11

10

3

*Fig.7*

27

"X"

34

24

35

28

33

Fig. 4

EP 0 109 092 B2

*Fig. 5*

*Fig. 6*

Fig. 8

Fig. 9a

A-A

Fig. 9b

B-B

EP 0 109 092 B2